# EUROPEAN PATENT SPECIFICATION

(11) **EP 2 664 234 B1**
(45) Date of publication and mention of the grant of the patent: **14.09.2016**
(21) Application number: 13167538.1
(22) Date of filing: 13.05.2013
(51) Int. Cl.: A01K 11/00

(54) **Animal identification tag**
Tieridentifikationsetikett
Étiquette d'identification d'animaux

(30) Priority: 17.05.2012 NZ 60004812
(43) Date of publication of application: 20.11.2013
(60) Divisional application: 16178356.8
(73) Proprietor: Allflex Europe, 35500 Vitré (FR)
(72) Inventor: Townsend, Grant, Cleveland, Queensland 4163 (AU); Stewart, James Andrew Nathan, Palmerston North (NZ); Decaluwe, Johan, 53000 Laval (FR); Hilpert, Jean-Jacques, 35500 Vitré (FR)
(74) Representative: Vidon Brevets & Stratégie

(56) References cited:
- WO-A1-91/10982
- GB-A- 1 320 454
- US-A- 5 891 156
- DATABASE WPI Week 199026 Thomson Scientific, London, GB; AN 1990-199089 XP002702765, -& NL 8 802 209 A (NEDAP NED APPARATEN) 2 April 1990 (1990-04-02)

## Description

### FIELD OF THE INVENTION

The invention relates to animal identification tags.

### BACKGROUND TO THE INVENTION

Ear tags are used for identification of animals. Existing ear tags are usually formed of plastic and include an identifier such as a number, barcode or electronic ID device. Tags include male components with a punch that is forced through the animal's ear by an applicator tool. The tool brings the male punch into alignment with an opening in a female component. The male punch locks into place in the female component, such that the tag is securely coupled to the animal's ear.

Known ear tags include the Applicant's "Flexitag" range, which includes a male pin and a single piece panel extending from a first end of the male pin. The other end of the panel includes an opening that receives the other end of the male pin to form a closed loop after application. This is a simple and cost-effective tag. The tag does not include any electronic component. The Applicant has devised further improvements in construction of the tag attachment mechanism and provision of electronic identification capability.

WO91/10982 and WO95/04455 disclose tags including a similar male pin and single panel configuration, forming a closed loop after application. In each case an electronic tag component may be located within the male pin. The structure of the male pin and the female opening is complex and expensive to manufacture. Further, the tag structure does not adequately protect the electronic components from damage.

It would be desirable to provide an improved animal ear tag or at least to provide the public with a useful choice.

### SUMMARY OF THE INVENTION

The invention provides an animal identification ear tag according to claim 1.

The first portion of the moulded panel has a thickness greater than a thickness of the panel body. Preferably the male pin has a section that is generally frustoconical in cross-section and extends from its widest point at or near the first end of the male pin to its narrowest point along the length of the male pin, thereby providing increased rigidity at the first end of the male pin.

The ear tag includes a blind bore in the male pin and an electronic tag component arranged in the blind bore. The blind bore is open at the first end of the male pin. Preferably the electronic tag component is an HDX RFID tag component. Preferably the electronic tag component is an encapsulated tag component.

The electronic tag component includes an elongate antenna that resides at least partly within the thickness of the first portion of the moulded panel.

Preferably the ear tag includes a blind bore in the male pin and an electronic tag component arranged in the blind bore, the electronic tag component including an elongate antenna that resides at least partly within the frustoconical section.

Preferably the electronic tag component is smaller than the blind bore, such that the electronic tag component has freedom of movement within the blind bore. Preferably the ear tag further includes a fluid, grease or foam filling a space between the electronic tag component and the wall of the blind bore.

Alternatively, the electronic tag component may be contained within a capsule received in the blind bore, such that the electronic tag component has freedom of movement within the capsule.

Preferably the ear tag further includes a fluid, grease or foam filling a space between the electronic tag component and the internal wall of the capsule.

Preferably the ear tag is configured to form a closed loop after application to an animal's ear.

Preferably a plurality of locking projections positioned around the periphery of the opening form a generally conical arrangement around the opening.

Preferably the ear tag includes a plurality of slots separating the locking projections.

Preferably the ear tag includes between 3 and 8 locking projections.

Preferably the male pin has an asymmetric cross-section.

Preferably the male pin has an asymmetric cross-section, with a long axis of the cross-section substantially parallel to a line from the male pin to the female portion.

Preferably the male pin has a generally oval cross-section with the long axis of the oval substantially parallel to a line from the male pin to the female portion.

Preferably the thickened portion extends to both sides of the panel body.

Preferably the electronic tag component is smaller than the blind bore, such that the electronic tag component has freedom of movement within the blind bore. Preferably the ear tag further includes a fluid, grease or foam filling a space between the electronic tag component and the wall of the blind bore.

Alternatively, the electronic tag component may be contained within a capsule received in the blind bore, such that the electronic tag component has freedom of movement within the capsule.
Preferably the ear tag further includes a fluid, grease or foam filling a space between the electronic tag component and the internal wall of the capsule.

### BRIEF DESCRIPTION OF THE DRAWINGS

The invention will now be described by way of example only, with reference to the accompanying drawings, in which:
- **Figure 1**: is a first perspective view of a tag according to one embodiment;
- **Figure 2**: is a second perspective view of the tag of Figure 1;
- **Figure 2A**: shows the female component of the tag of Figure 1 in greater detail;
- **Figure 3**: is a side view of the tag of Figure 1;
- **Figure 4**: is a front view of the tag of Figure 1;
- **Figure 5**: is a cross-section along the line 5'-5' shown in Figure 4;
- **Figure 6**: shows the tag of Figure 1 after application;
- **Figure 6A**: is a cross-section along the line 6A-6A shown in Figure 6;
- **Figure 7**: is a cross-section through a tag according to a second embodiment;
- **Figure 8**: is a cross-section through the tag of Figure 7, after application;
- **Figure 9**: is a cross-section through a male pin according to a further embodiment;
- **Figure 10**: is a first perspective view of a tag according to a further embodiment;
- **Figure 11**: is a second perspective view of the tag of Figure 10;
- **Figure 12**: is a perspective view of the male pin of the tag of Figure 10;
- **Figure 13**: is a second perspective view of the male pin of the tag of Figure 10;
- **Figure 14**: is a side view of the male pin of the tag of Figure 10;
- **Figure 15**: is a second side view of the male pin of the tag of Figure 10; and
- **Figure 16**: is a cross-section through a tag according to a further embodiment.

### DETAILED DESCRIPTION

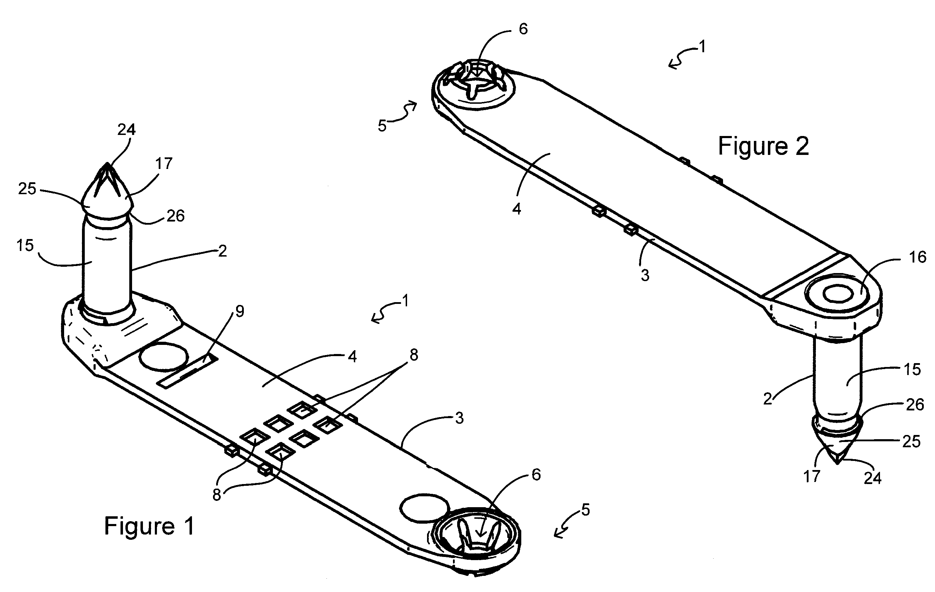

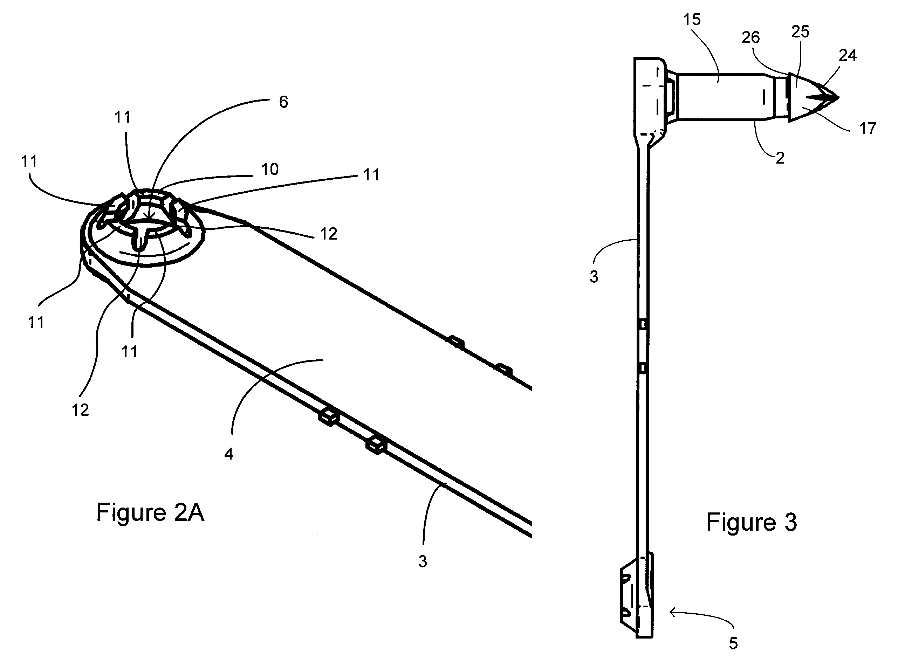

Figures 1 and 2 show an animal identification tag 1. The tag 1 includes a male pin or punch 2 and a panel 3. The panel 3 is formed as a single moulded piece. The panel 3 includes a panel portion 4 and a female portion 5, which includes an opening 6. The panel 3 also includes a number of recesses 8, which provide a local weakening, helping the panel 3 to bend during application, as will become apparent below. Similarly the recess 9 may help bending of the tag near the male pin 2, assisting in application of the tag using an applicator, such as the Flexitag applicators available from Allflex.

As shown in Figures 1 and 2, and in further detail in Figure 2A, the opening 6 is surrounded by a locking flange 10 formed by a number of fingers or projections 11, which project inwards at an angle towards the centre of the opening 6. The fingers 11 therefore form a generally conical arrangement or flange 10, with slots or spaces 12 between the fingers 11. The locking flange and its fingers are also formed integrally as part of the panel 3, in a single moulded piece. In the embodiment shown there are five fingers 11, but any suitable number of fingers may be used. Preferably between 3 and 8 fingers are used.

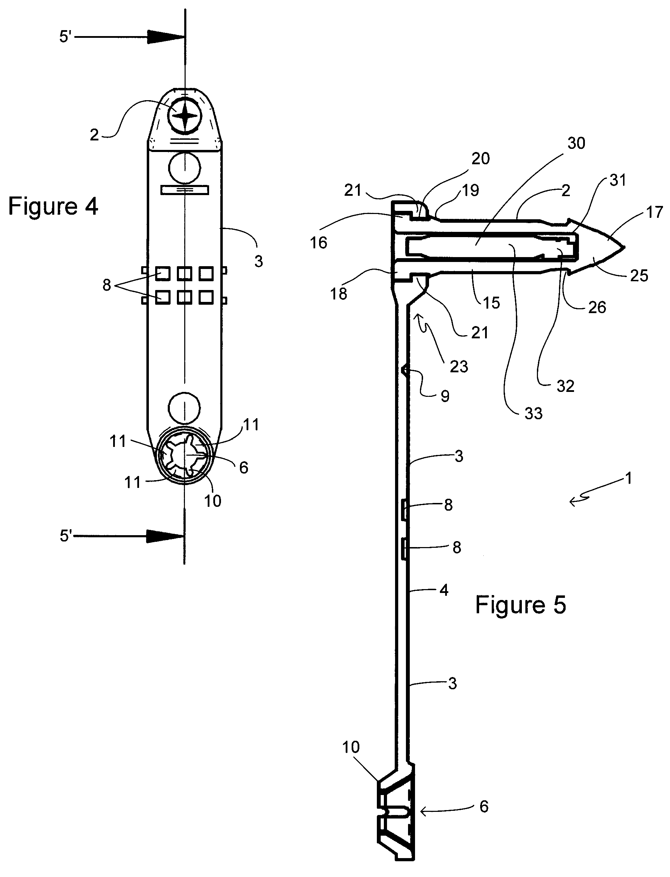

The male pin 2 has a shaft 15, a base portion 16 (see Figure 5) and a distal tip portion 17. The base portion 16 is shaped to couple with an opening in the panel 3, by a push-fit. As shown in Figure 5, the base portion 16 includes a base flange 18, and a locking projection 19 defining a groove 20 running around the circumference of the male pin 2. A lip 21 on the panel 3 locks into this groove 20 when the male pin is fully inserted into the panel 3. The male pin 2 and the panel 3 may therefore be formed as separate components before assembly into the complete tag 1.

As shown in Figure 5, the first portion 23 of the panel 3, i.e. that portion surrounding the base of the male pin 2, may be formed as a thicker region than the main part of the panel 3. This thicker region provides improved rigidity at the mounting of the male pin 2 to the panel 3, and may provide improved rigidity to that part of the male pin that resides within the thickness of the panel 3. This increased rigidity improves the performance of the tag, in particular the application of the tag using a plier or automatic applicator. In some embodiments this region may be 5 to 10mm in thickness, preferably around 6-8mm in thickness. In contrast, the thinner sections of the panel 3 may be around 1 to 3 mm, preferably 1 to 2 mm, ideally around 1.25 to 1.45 mm thick.

The distal or tip portion 17 of the male punch may be formed with a sharp tip with a number of sharp ridges 24 (see Figure 1) in order better to penetrate the tissue of an animal's ear during application.

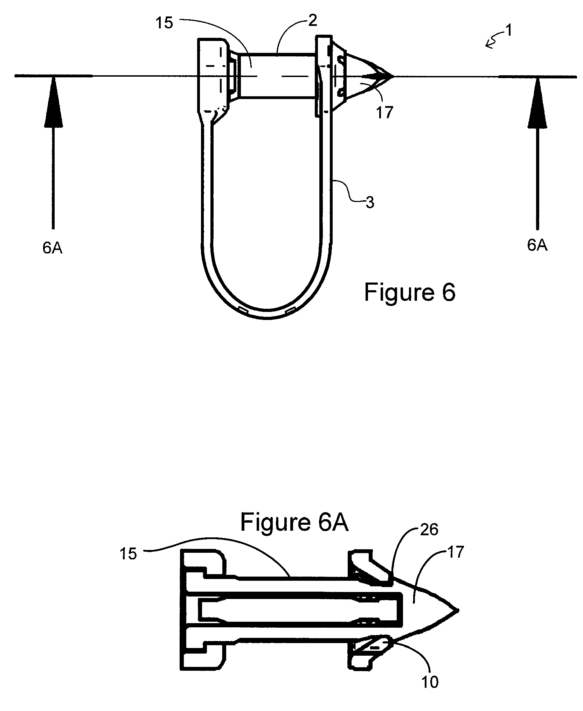

The tip portion 17 has a generally conical section 25 leading to a locking shoulder 26. The locking shoulder 26 cooperates with the locking flange 10 on application of the tag 1 to an animal. An applicator receives the tag 1 in a generally U-shape and drives the male pin through the animal's ear. The conical section 25 passes through the animal's ear and then into the opening 6, forcing the locking fingers 11 to bend slightly, allowing the locking shoulder 26 to pass beyond the locking fingers 11. The locking fingers then return to their natural position, snapping inwards and acting against the locking shoulder 26 as shown in Figure 6. The male pin cannot be retracted from the opening because of the locking of the male pin 2 into the opening 6. The tag then forms the closed U-shape as shown in Figure 6.

Figure 5 also shows the position of an electronic tag component 30. The electronic component 30 sits in a blind bore 31 (i.e. a bore open at only one end) formed in the male pin 2. The blind bore may be open at the base of the male pin 2, and may be sealed after insertion of the electronic tag component using any suitable sealant or plug. The electronic component 30 may be of any desired construction and may or may not be encapsulated in glass or other suitable encapsulation material. In one embodiment the electronic component may include an ID element 32 with an elongate antenna 33 consisting of a conductive wire wound around a core (e.g. copper wire wound around a ferrite core). The electronic tag component may be an HDX (half-duplex) RFID (Radiofrequency identification) tag, but other types of electronic tag component may be used.

Figure 6 shows the ear tag in a closed configuration. During application, the male pin 2 penetrates the animal's ear before entering the female portion of the panel 3, the tag forming a closed loop after application. Figure 6A is a cross-section along the line 6A-6A in Figure 6. Figure 6A shows the locking projections of the conical flange 10 acting against the locking shoulder 26 to lock the male and female components together.

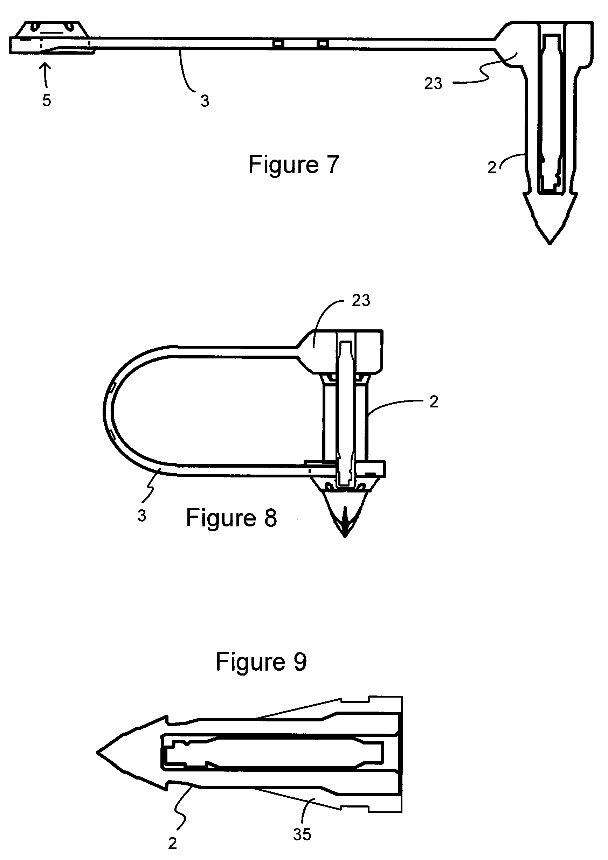

Figure 7 shows a further embodiment, in which the first portion 23 of the panel is formed with still greater thickness. In this tag the male pin has the same length from the opening of the blind bore 31 to the tip. However, the distance from the tip to the plane of the panel 3 is less than in the tag of Figures 1 to 6A. This alters the position of the electronic tag component with respect to the panel 3. The first portion 23 is significantly thickened on both sides of the panel 3. This provides further support to the male pin 2. Furthermore, a larger section of the antenna portion of the electronic tag component resides within the thickness of the first portion 23.

Figure 8 shows the ear tag of Figure 7 in a closed configuration.

Figure 9 shows a further embodiment of male pin 2, which may be used with a panel 3 such as those described above. In this embodiment a frustoconical section 35 extends from the base end of the male pin to a point part way along the male pin 2. This frustoconical section may be formed integrally in a single moulding with the male pin 2 and provides improved rigidity, particularly in the region of the electronic tag component antenna, which resides at least partly within the frustoconical section.

In any embodiment disclosed herein, the panel 3 may be made from polyamide or any other suitable plastic material with some flexibility but sufficient rigidity to form the locking projections 11. The male pin 2 may be made from a hard plastic material in order to pierce the animal's ear and protect the electronic tag component.

The arrangement of the locking projections 11 provides a strong, rigid locking mechanism. However, this arrangement also requires more force to be applied in order to engage the male and female components during application of the tag than is the case for tags with a simple resilient female opening. These greater forces may create undesirable bending of the male component during application, which may lead to damage to the male pin, or to the electronic tag component housed within the male pin. Electronic tag components employing ferrite cores have somewhat fragile antenna sections, particularly when unencapsulated, and such bending of the male pin may damage the antenna, leaving the tag useless. In order to address this problem, the rigidity of the male pin may be improved, or the male pin may be supported, e.g. as described above. Increasing the overall diameter of the male pin is generally undesirable. However, the frustoconical section 35 (see Figure 9) and/or supporting thickness in the region 23 (see Figure 5) may be used to improve rigidity in the male tag, particularly the base section of the male pin where the antenna portion of the electronic tag component resides.

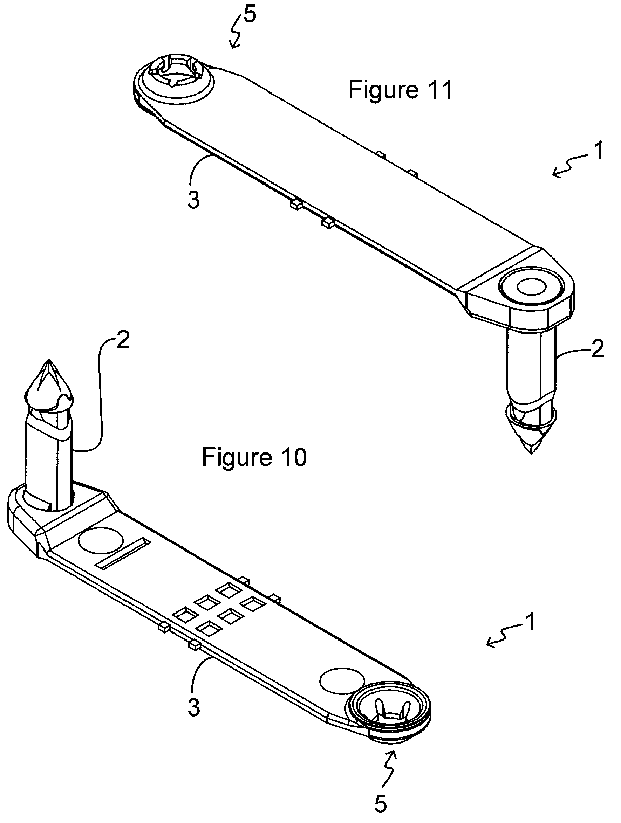

Figures 10 to 15 illustrate a further embodiment of tag 1. In this embodiment the male pin 2 has an asymmetric cross-section, as will be described below. The electronic tag component may be contained within the hollow male pin, as described above. The panel 3 and other features of the tag are otherwise as described above.

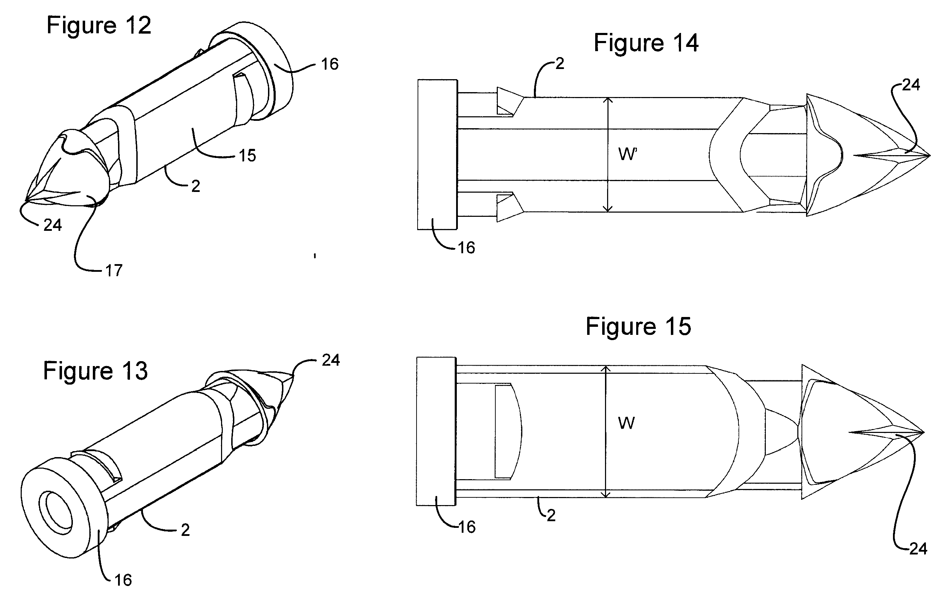

The asymmetric cross-section can be seen in Figures 10 to 13, but is most apparent by comparison of the two side views in Figures 14 and 15. The width W of the male pin 2 in the view of Figure 15 is greater than the width W' in Figure 14. In this embodiment the cross-section is preferably generally elliptical or oval.

As shown in Figure 10, the male pin is preferably arranged in the panel 3 such that the longer axis of its cross-section is parallel to the length of the panel 3, or more generally the long axis of the oval is substantially parallel to a line from the male pin to the female portion of the panel. This can be achieved reliably by forming the base of the male pin and the cooperating opening and portion 21 of the panel 3 with cooperating asymmetric formations to position the male pin correctly. This positioning means that the longer axis is positioned to resist the bending forces created during application of the tag. Less strength is required perpendicular to that axis, as the lateral bending forces are less.

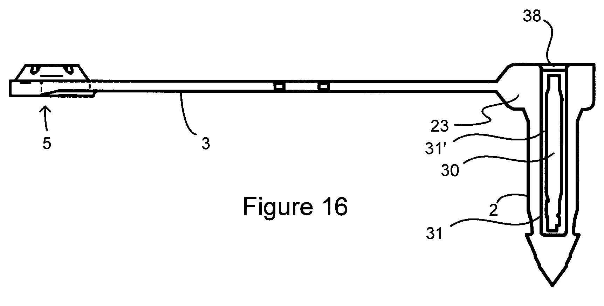

Figures 16 shows a further embodiment of the invention. This embodiment is similar to that of Figures 7 and 8, except for the following points.

In Figure 16, the electronic tag component 30 is positioned within a blind bore 31. In this embodiment the electronic tag component 30 has a size that is significantly smaller than the bore 31. This results in a space 31' surrounding the electronic tag component 30. This can be contrasted with Figure 7, where the electronic tag component fits relatively closely within the bore.

The electronic tag component 30 may simply float within an air space 31' within the bore 31. However, in preferred embodiments the space 31' may be filled with a fluid, viscous substance (such as a grease or gel), a foam material or the like. Preferably the substance allows some movement of the electronic tag component 30. Optionally the space 31' may be sealed by a plug or cap 38. The plug or cap 38 may be secured to the male pin by any suitable attachment means, including but not restricted to; laser welding, hot melt welding, gluing or by some other mechanical means. The plug or cap may be a plastic component that may be formed separately or optionally may be formed as part of the male pin or panel moulding, Alternatively, the plug or cap may be a resin or similar cap formed in situ.

The plug or cap closes the bore 31. Further, the plug or cap 31 may seal the bore to prevent ingress of moisture or other contaminants.

This arrangement provides some freedom of movement of the electronic tag component and helps to cushion the electronic tag component after application of the tag. This will help to prevent damage to the electronic tag component caused by impact or shock stresses. Further, this arrangement limits the bending forces applied to the electronic tag component during application of the tag, because the male pin must bend through a greater angle in order to transmit that bending force to the electronic tag component.

In conventional tags, the RFID transponder is generally encapsulated in glass or a similar material. Inside this is a resin that holds the transponder in a fixed position. The encapsulated transponder is a single, rigid component.

In a further alternative, the electronic tag component may be loosely enclosed in a capsule (formed from e.g. plastic, glass or the like), which may be filled with a fluid, viscous substance (such as a grease or gel), a foam material or the like. In this embodiment the capsule forms a close fit to the bore 31 (as in e.g. Figure 7), but the electronic tag component has some freedom of movement within the capsule. This provides similar benefits to those of the embodiment of Figure 16.

Either of these arrangements of the electronic tag component within the male pin may be used with any of the other embodiments described herein.

In any of the embodiments described above, except the asymmetric pin embodiment of Figures 10-15, the panel may be free to rotate with respect to the male pin. This may help to prevent damage to the tag or the animal's ear, for example if the panel catches on a branch or the like. The Applicant's tag may be particularly suited to identification of sheep, but may also be used for identification of other animals.

While the present invention has been illustrated by the description of the embodiments thereof, and while the embodiments have been described in detail, it is not the intention of the Applicant to restrict or in any way limit the scope of the appended claims to such detail. Additional advantages and modifications will readily appear to those skilled in the art. Therefore, the invention in its broader aspects is not limited to the specific details, representative apparatus and methods, and illustrative examples shown and described. Accordingly, departures may be made from such details without departure from the scope of the Applicant's general inventive concept.

## Claims

1. An animal identification ear tag (1) including:
i. a male pin (2) having a first end (16), a second end (17) configured to penetrate an animal's ear, a locking shoulder (26) positioned adjacent the second end and a blind bore (31) open at the first end and extending part way along the length of the male pin (2);
ii. an elongate electronic tag component (30) arranged within the blind bore (31) with its antenna element (33) extending towards the first end (16); and
iii. a single piece moulded panel (3) including:
a. a first portion (23) configured to couple to the first end of the male pin (2);
b. a panel body (4) having a first thickness;
c. a female portion (5) including an opening (6) configured to receive the second end of the male pin (2) including the locking shoulder;
**characterised in that** the first portion includes an opening configured to couple to the first end of the male pin (2) in a push-fit arrangement and is surrounding a base portion of the male pin;
and **in that** the first portion (23) is a thickened portion, the thickened portion having a thickness greater than the first thickness, at least part of the antenna element (33) of the electronic tag component (30) residing in the thickness of the thickened portion.

2. An ear tag as claimed in claim 1 wherein the male pin (2) has a section that is generally frustoconical in cross-section and extends from its widest point at or near the first end (16) of the male pin (2) to its narrowest point along the length of the male pin (2), thereby providing increased rigidity at the first end of the male pin (2).

3. An ear tag as claimed in any preceding claim, wherein either the electronic tag component (30) is smaller than the blind bore (31), such that the electronic tag component (30) has freedom of movement within the blind bore (31), or the electronic tag component (30) is contained within a capsule received in the blind bore (31), such that the electronic tag component (30) has freedom of movement within the capsule.

4. An ear tag as claimed in claim 3, further including a fluid, grease or foam filling a space between the electronic tag component (30) and the wall of the blind bore (31), or a space between the electronic tag component (30) and the internal wall of the capsule.

5. An ear tag as claimed in any preceding claim, configured to form a closed loop after application to an animal's ear.

6. An ear tag as claimed in any preceding claim, wherein the male pin (2) has an asymmetric cross-section, with a long axis of the cross-section substantially parallel to a line from the male pin (2) to the female portion (5).

7. An ear tag as claimed in any preceding claim wherein the thickened portion extends to both sides of the panel body.

8. An ear tag as claimed in any one of claims 1-5 or claim 7 as long as dependent on any one of claims 1-5, wherein the first portion is configured to couple to the first end of the male pin (2) so as to allow free rotation of the moulded panel (3) around the male pin (2).

9. An ear tag as claimed in any preceding claim, wherein the female portion (5) includes a plurality of locking projections positioned around the periphery of the opening (6) and extending towards the centre of the opening, the locking projections being configured to cooperate with the locking shoulder to lock the male pin to the female portion after application of the tag to an animal's ear.

## Patentansprüche

1. Tieridentifizierungsohrmarke (1), die umfasst:
i. einen männlichen Stift (2) mit einem ersten Ende (16), einem zweiten Ende (17), das dazu eingerichtet ist, das Ohr eines Tieres zu durchdringen, einem Verriegelungsansatz (26), der benachbart zu dem zweiten Ende positioniert ist, und einer Blindbohrung (31), die an dem ersten Ende offen ist und sich einen Teil des Weges entlang der Länge des männlichen Stiftes (2) erstreckt;
ii. eine längliche elektronische Markenkomponente (30), die innerhalb der Blindbohrung (31) angeordnet ist, wobei sich ihr Antennenelement (33) in Richtung des ersten Endes (16) erstreckt; und
iii. eine einzelstückgeformte Platte (3), die umfasst:
a. einen ersten Teil (23) eingerichtet, um an das erste Ende des männlichen Stiftes (2) zu koppeln;
b. einen Plattenkörper (4) mit einer ersten Dicke;
c. einen weiblichen Teil (5), der eine Öffnung (6) umfasst, die eingerichtet ist zum Aufnehmen des zweiten Endes des männlichen Stiftes (2), der den Verriegelungsansatz umfasst;
**dadurch gekennzeichnet, dass** der erste Teil eine Öffnung aufweist, die eingerichtet ist an das erste Ende des männlichen Stiftes (2) in einer Steckverschlussanordnung zu koppeln und einen Basisteil des männlichen Stifts zu umgeben;
und dadurch, dass der erste Teil (23) ein verdickter Teil ist, wobei der verdickte Teil eine Dicke größer als die erste Dicke hat, wobei wenigstens einen Teil des Antennenelements (33) der elektronischen Markenkomponente (30) sich in der Dicke des verdickten Teils befindet.

2. Ohrmarke nach Anspruch 1, wobei der männliche Stift (2) einen Abschnitt hat, der grundsätzlich kegelstumpfartig im Profil ist und sich von seinem weitesten Punkt bei oder in der Nähe des ersten Endes (16) des männlichen Stifts (2) bis zu seinem schmalsten Punkt entlang der Länge des männlichen Stiftes (2) erstreckt, wodurch eine erhöhte Festigkeit des ersten Endes des männlichen Stifts (2) bereitgestellt wird.

3. Ohrmarke nach einem der vorherigen Ansprüche, wobei entweder die elektronische Markenkomponente (30) kleiner ist als die Blindbohrung (31), sodass die elektronische Markenkomponente (30) Bewegungsfreiheit innerhalb der Blindbohrung (31) hat, oder die elektronische Markenkomponente (30) innerhalb einer Kapsel enthalten ist, die in der Blindbohrung (31) empfangen wird, sodass die elektronische Markenkomponente (30) Bewegungsfreiheit innerhalb der Kapsel hat.

4. Ohrmarke nach Anspruch 3, die weiter eine Flüssigkeit, Schmiere oder Schaum umfasst, die den Raum zwischen der elektronischen Markenkomponente (30) und der Wand der Blindbohrung (31) oder einen Raum zwischen der elektronischen Markenkomponente (30) und der inneren Wand der Kapsel auffüllen.

5. Ohrmarke nach einem der vorherigen Ansprüche, die eingerichtet ist zum Bilden einer geschlossenen Schleife nach dem Anbringen an dem Ohr eines Tieres.

6. Ohrmarke nach einem der vorherigen Ansprüche, wobei der männliche Stift (2) ein asymmetrisches Profil mit einer langen Achse des Profils hat, die im Wesentlichen parallel zu einer Linie von dem männlichen Stift (2) zu dem weiblichen Teil (5) ist.

7. Ohrmarke nach einem der vorherigen Ansprüche, wobei der dickere Teil sich nach beiden Seiten des Plattenkörpers erstreckt.

8. Ohrmarke nach einem der Ansprüche 1 bis 5 oder 7 solange 7 von einem der Ansprüche 1 bis 5 abhängt, wobei der erste Teil eingerichtet ist, um mit dem ersten Ende des männlichen Stifts (2) zu koppeln, um eine freie Rotration der geformten Platte (3) um den männlichen Stift (2) zu erlauben.

9. Ohrmarke nach einem der vorherigen Ansprüche, wobei der weibliche Teil (5) eine Vielzahl von Verriegelungsvorsprüngen umfasst, die um die Peripherie der Öffnung (6) positioniert sind und sich in Richtung der Mitte der Öffnung erstrecken, wobei die Verriegelungsvorsprünge eingerichtet sind, um mit dem Verriegelungsansatz zusammenzuwirken, um den männlichen Stift mit dem weiblichen Teil nach Anbringung der Marke an einem Ohr eines Tieres zu verriegeln.

## Revendications

1. Étiquette d'oreille d'identification d'animaux (1) comportant :
i. une broche mâle (2) ayant une première extrémité (16), une seconde extrémité (17) configurée pour pénétrer dans une oreille d'un animal, un épaulement de verrouillage (26) positionné adjacent à la seconde extrémité et un alésage borgne (31) ouvert au niveau de la première extrémité et s'étendant en partie le long de la broche mâle (2) ;
ii. un composant d'étiquette électronique allongé (30) agencé à l'intérieur de l'alésage borgne (31) avec son élément d'antenne (33) s'étendant vers la première extrémité (16) ; et
iii. un panneau moulé d'une seule pièce (3) comportant :
a. une première partie (23) configurée pour se coupler à la première extrémité de la broche mâle (2) ;
b. un corps de panneau (4) ayant une première épaisseur ;
c. une partie femelle (5) comportant une ouverture (6) configurée pour recevoir la seconde extrémité de la broche mâle (2) comportant l'épaulement de verrouillage ;
**caractérisé en ce que** la première partie comporte une ouverture configurée pour se coupler à la première extrémité de la broche mâle (2) dans un agencement par insertion et entoure une partie de base de la broche mâle ;
et **en ce que** la première partie (23) est une partie épaissie, la partie épaissie ayant une épaisseur plus grande que la première épaisseur, au moins une portion de l'élément d'antenne (33) du composant d'étiquette électronique (30) étant logée dans l'épaisseur de la partie épaissie.

2. Étiquette d'oreille selon la revendication 1, dans laquelle la broche mâle (2) a une section qui est en général tronconique dans une section transversale et s'étend de son point le plus large au niveau ou à proximité de la première extrémité (16) de la broche mâle (2) à son point le plus étroit le long de la longueur de la broche mâle (2), fournissant ainsi une rigidité accrue au niveau de la première extrémité de la broche mâle (2).

3. Étiquette d'oreille selon l'une quelconque des revendications précédentes, dans laquelle le composant d'étiquette électronique (30) est plus petit que l'alésage borgne (31) de sorte que le composant d'étiquette électronique (30) a une liberté de mouvement à l'intérieur de l'alésage borgne (31), ou le composant d'étiquette électronique (30) est contenu à l'intérieur d'une capsule reçue dans l'alésage borgne (31) de sorte que le composant d'étiquette électronique (30) a une liberté de mouvement à l'intérieur de la capsule.

4. Étiquette d'oreille selon la revendication 3, comportant en outre un fluide, une graisse ou une mousse remplissant un espace entre le composant d'étiquette électronique (30) et la paroi de l'alésage borgne (31), ou un espace entre le composant d'étiquette électronique (30) et la paroi interne de la capsule.

5. Étiquette d'oreille selon l'une quelconque des revendications précédentes, configurée pour former une boucle fermée après application sur une oreille d'un animal.

6. Étiquette d'oreille selon l'une quelconque des revendications précédentes, dans laquelle la broche mâle (2) a une section transversale asymétrique, avec un axe longitudinal de la section transversale sensiblement parallèle à une ligne allant de la broche mâle (2) à la partie femelle (5).

7. Étiquette d'oreille selon l'une quelconque des revendications précédentes, dans lequel la partie épaissie s'étend des deux côtés du corps de panneau.

8. Étiquette d'oreille selon l'une quelconque des revendications 1 à 5 ou selon la revendication 7 à condition de dépendre de l'une quelconque des revendications 1 à 5, dans lequel la première partie est configurée pour se coupler à la première extrémité de la broche mâle (2) de manière à permettre une rotation libre du panneau moulé (3) autour de la broche mâle (2).

9. Étiquette d'oreille selon l'une quelconque des revendications précédentes, dans laquelle la partie femelle (5) comporte une pluralité de projections de verrouillage positionnées autour de la périphérie de l'ouverture (6) et s'étendant vers le centre de l'ouverture, les projections de verrouillage étant configurées pour coopérer avec l'épaulement de verrouillage pour verrouiller la broche mâle à la partie femelle après l'application de l'étiquette sur une oreille d'un animal.
